# EUROPEAN PATENT SPECIFICATION

(11) **EP 4 180 840 B1**
(45) Date of publication and mention of the grant of the patent: **18.06.2025**
(21) Application number: 21207611.1
(22) Date of filing: 10.11.2021
(51) Int. Cl.: G01S 7/539, G01S 15/931

(54) **METHOD AND DEVICE FOR DETERMINING A CLASS OF AN OBJECT USING AN ULTRASONIC SENSOR**
VERFAHREN UND VORRICHTUNG ZUR BESTIMMUNG EINER OBJEKTKLASSE MITTELS EINES ULTRASCHALLSENSORS
PROCÉDÉ ET DISPOSITIF DE DÉTERMINATION D'UNE CLASSE D'UN OBJET À L'AIDE D'UN CAPTEUR À ULTRASONS

(43) Date of publication of application: 17.05.2023
(73) Proprietor: Elmos Semiconductor SE, 44227 Dortmund (DE)
(72) Inventor: SHIH, Ya Shan, Tainan City 710042 (TW)
(74) Representative: Tautz & Schuhmacher

(56) References cited:
- DE-A1- 102005 044 050
- DE-A1- 102007 035 219

## Description

The present invention is directed to a method for determining a class of an object using an ultrasonic sensor, a control system configured to carry out the method, and a computer program as well as a computer-readable data carrier comprising instructions which, when being executed by a computer, cause the computer to carry out the method.

The present invention is thus in the field of ultrasonic sensor system. Such ultrasonic sensor systems often comprise an ultrasonic transducer configured to emit ultrasonic waves and to receive ultrasonic waves. An ultrasonic transducer therefore may have the function of an emitter and/or also the function of a receiver, i.e., the ultrasonic transducer may be a transceiver.

Ultrasonic transducers typically comprise a cup-shaped housing having a bottom wall and an essentially cylindrical side wall, which together form a hollow void within the housing. An oscillation generator is attached to an inner side of a bottom wall of the housing and configured to excite oscillations of the bottom wall, which, thus, acts as an oscillation membrane. The cup-shaped housing is typically manufactured as a single piece made of aluminum. The oscillation generator may be attached to the bottom wall by an attachment structure to influence the oscillatory behavior of the ultrasonic transducer. Moreover, ultrasonic transducers are known having an altered bottom wall to adjust the oscillatory behavior of the ultrasonic transducer. Such ultrasonic transducers are described for example in the documents DE 10 2015 015 900 B3, DE 10 2015 015 901 B3 and DE 10 2015 015 903 B3.

Ultrasonic transducers are often used for automotive applications related to a parking assistance system and a distance control and other driver assistance applications.

These applications are typically based on one or more ultrasonic transducers emitting ultrasonic waves, which are at least partly reflected by an object possibly arranged in an area of detection of the respective ultrasonic transducer, and typically received by the same ultrasonic transducer and/or another ultrasonic transducer installed at the vehicle.

Information about a presence and an optional distance of an object in a field of view of the ultrasonic transducer may be extracted based on a time of flight and optionally also on an amplitude of the received ultrasonic waves. The time of flight may be defined as a duration/timespan from sending/emitting the ultrasonic waves using the ultrasonic transducer until receiving the ultrasonic waves reflected by the object using the same ultrasonic transducer.

More specifically, sensing an object using an ultrasonic transducer typically comprises three stages, a driving stage during which the ultrasonic waves are emitted by the ultrasonic transducer, a damping stage following the driving stage during which the ultrasonic transducer rings down, and an echo/receiving stage following the damping stage during which the transducer acts as a receiver.

Typically, an ultrasonic transducer comprises a cup-shaped housing having a bottom wall and an essentially cylindrical side wall, which together form a hollow void within the housing. An oscillation generator is attached to an inner side of a bottom wall of the housing and configured to excite oscillations of the bottom wall, which, thus, acts as an oscillation membrane.

During the driving stage the oscillation generator excites the bottom wall of the transducer such that the ultrasonic waves are emitted, wherein the damping stage is defined as a timespan during which the oscillation generator does not (longer) excite the bottom of the wall but the bottom of the wall is still oscillating thereby still emitting ultrasonic waves. During the receiving or echo stage, the bottom of the wall of the ultrasonic transducer is excited by the ultrasonic waves reflected by the object in the field of view of the ultrasonic transducer. The excitement caused by the reflected ultrasonic waves may be measured/sensed. Knowing a time of sending the ultrasonic waves and a time of receiving the reflected ultrasonic waves as well as a velocity of the ultrasonic waves, makes it possible to determine a distance of the object reflecting the ultrasonic waves to the ultrasonic transducer.

Moreover, in the recent years there is rising demand for ultrasonic sensor systems that are not only configured to detect a presence/absence of an object in their field of view as well as a distance of the object to the ultrasonic transducer but also allow to determine a class of the object.

The class of the object may also be called a kind of the object. The class of the object may be for example a pole, a wall and/or a curbstone.

Based on the class of the object it may be possible to decide whether the detected object is considered as an obstacle or not. Thus, unnecessary parking warnings, e.g., with parking boxes common in Asia comprising curbstone at tire height, may be avoided.

Methods for detecting a height of an object using an ultrasonic sensor and afterwards classifying the object based on the determined height are known from the state of the art.

For example DE102016113736A1 is directed to a method for detecting an object in an environment of a vehicle, in which an ultrasonic signal is transmitted with an ultrasonic sensor, a first echo of the ultrasonic signal reflected by the object is received and an amplitude of the first echo is determined. The amplitude of the first echo is compared with at least one predetermined threshold value, and a height of the object is determined based on the comparison of the amplitude with the at least one threshold value. The object is classified as high if the amplitude of the first echo is greater than the at least one threshold value, and the object is classified as low if the amplitude of the first echo is less than the at least one threshold value. A confidence value for the classification of the height of the object is determined, the confidence value being set as high if the height of the object is classified as low or high, and the confidence value being set as low otherwise.

One of the disadvantages of this state of the art is that the actual height of the object is determined, e.g., based on an amplitude of the received ultrasonic waves, to classify the object what is often inaccurate, i.e., not sufficiently precise.

DE102007035219A1 is directed to an object classification method for classifying an object, in particular in a parking assistance method for assisting a parking operation of a vehicle, comprising the steps of: (a) transmitting a transmit signal from the vehicle toward a travel path boundary; (b) receiving a receive signal reflected from the travel path boundary; (c) counting local maxima of the received signal within a temporal section of the received signal; and (d) generating an object classification signal which depends on the number of local maxima of the received signal within the temporal section.

The invention is based on the object of providing a method for determining a class of an object using an ultrasonic sensor, e.g., an ultrasonic transducer, wherein the method is improved compared to the prior art.

This object is solved, inter alia, by a method for determining a class of an object using an ultrasonic sensor according to claim 1, a control system configured to carry out the method according to claim 12, and a computer program and/or a computer-readable data carrier according to claim 13. Preferred embodiments are part of the dependent claims.

More specifically, the object is solved by a method for determining a class of an object using an ultrasonic sensor system.

The method comprises driving the ultrasonic sensor system to emit ultrasonic waves, and receiving the ultrasonic waves reflected by the object at the ultrasonic sensor system.

The method is characterized by determining a shape of an envelope corresponding to an amplitude of the ultrasonic waves received at the ultrasonic sensor, and determining the class of the object based on the determined shape of the envelope.

More specifically, a method is provided for classifying an object based on an output of an ultrasonic system. The ultrasonic system may comprise one or more ultrasonic sensors. The ultrasonic sensors may be configured to send/emit ultrasonic waves and/or to receive/sense ultrasonic waves.

That is, the ultrasonic system is configured to act as a transceiver for ultrasonic waves. Therefore, the at least one ultrasonic sensor of the ultrasonic sensor system may comprise a piezoelectric element. By driving the piezoelectric element with an alternating voltage/current, the inverse piezoelectric effect may be used to produce and emit the ultrasound waves.

If an object, to be classified is located in a field of view of the ultrasonic sensor system, i.e., not close and not too far away, these emitted ultrasound waves will be reflected by the object and will return to the ultrasonic sensor system. The returning and thus received ultrasound waves may be detected using the piezoelectric element. More specifically, the reflected and received ultrasonic waves may bend the piezoelectric material of the piezoelectric element thereby creating a voltage with changing/oscillating amplitude, i.e., a voltage having an amplitude changing/oscillating over time.

This voltage may be input into an envelope detector which may be part of an integrated circuit and/or an electronic control unit. The envelope detector may be configured to detect and determine the envelope based on the oscillating amplitudes of the voltage. The envelope (curve) describes the course of the oscillating amplitude of the voltage. Here, the envelope may be the upper envelope. The envelope detector/demodulator may be implemented using a diode as a rectifier for the input signal, here the voltage output by the ultrasonic sensor system. This allows only one polarity of the (high-frequency) received signal to pass, so that only the upper half of the (high-frequency) oscillations remains. The rectifier may be followed by a low-pass filter to remove the (high-frequency) carrier signal such that the envelope results.

According to the method a shape, i.e., a form or a change of (the values of) the envelope over time, is determined. Since the shape of the envelope is characteristic for the class to be determined, the determined shape is used for determining the class of the object. It is possible that these two steps, i.e., determining the shape and the class of the object, are carried out by the electronic control unit and/or by the integrated circuit.

The above described method allows to classify an object being detected by an ultrasonic sensor system without the need of determining the height thereof. Therefore, a precise method for classifying an object may be provided.

Determining the shape of the envelope comprises determining a number of peaks included in the envelope after emitting the ultrasonic waves.

A peak may have substantially an inverse V shape, i.e., having substantially an inverse parable shape. That is, a peak may be defined as a part of the envelope where the envelope at first rises, i.e., comprises a positive gradient, until a top is reached, i.e., where the gradient is equal to zero, and afterwards falls, i.e., comprises a negative gradient. Peaks having a height being smaller than a certain predefined threshold may be filtered out, i.e., not considered as a peak.

Determining the shape of the envelope may comprise converting the envelope from an analog signal into at least one digital signal and determining the number of peaks based on the at least one digital signal.

Converting the envelope from an analog signal into a digital signal may be done using an analog-digital-converter. The analog-to-digital converter (ADC, A/D, or A-to-D) is a system that converts an analog signal, here the envelope, into a digital signal. The digital output may be a voltage above zero for 1 and ground for 0, wherein the digital output signal is proportional to the analog input signal. The converter may be a part of the electronic control unit and/or the integrated circuit.

Determining the number of peaks using the analog signal may comprise counting the number of times the digital signal switches from 0 to 1 (or from 1 to 0). This may be done in the electronic control unit and/or the integrated circuit.

Converting the envelope from the analog signal into the digital signal may comprise determining a maximum of the envelope, and converting the envelope using a threshold being smaller than the determined maximum of the envelope to generate the at least one digital signal.

The threshold may be the threshold of the analog-digital-converter. That is, based on a maximum of the envelope at least one threshold, preferably two thresholds, may be determined for converting the analog signal into the digital signal.

Additionally or alternatively, converting the envelope from the analog signal into the digital signal may comprise determining the maximum of the envelope using a first analog gain, and converting the envelope using a threshold and using a second analog gain exceeding the first analog gain. The threshold is substantially equal to or smaller than the determined maximum of the envelope. The threshold may be a fixed and/or predefined threshold.

The gain may be the analog and/or digital gain of an amplifier, which may be a part of the integrated circuit and/or the electronic control unit. The amplifier may receive the envelope as an input and output the envelope amplified depending on the gain. That is, additionally or alternatively to tuning the threshold, also the (analog) gain may be tuned by converting the analog signal into the digital signal.

Converting the envelope from the analog signal into the digital signal may comprise setting the at least one digital signal to 1 when the envelope exceeds the threshold and to 0 when the envelope is below the threshold, or setting the at least one digital signal to 0 when the envelope exceeds the first threshold and to 1 when the envelope is below the threshold.

That is, the analog-digital-converter may set the value of the digital signal to 0, when the envelope is smaller than the threshold and to 1 when the envelope exceeds the threshold (or the other way round).

When the number of peaks included in the envelope is determined to be equal to two, determining the shape of the envelope comprises determining a shape of the peaks included in the envelope.

More specifically, when the number of the peaks, i.e., received echoes, is not equal to two, no indirect echo is received. Only objects having a height exceeding a certain threshold or being smaller than a certain threshold produce only one echo (either solely an indirect echo for object approximately up to 10cm or solely a direct echo for objects such as a pole with a height of approximately 100 cm), so that the object may be classified as not being a curbstone having a height of approximately 20 cm when only one echo is received. More specifically, a low curb stone (approximately 10 cm) will only reflect an indirect echo, resulting in solely one peak only. As the height of the reflecting object grows, the amplitude of the direct echo (first echo) rises due to the increases reflective area of the object, and thus two peaks are included in the envelope. That is, a higher curb having a height of for example 20 cm to 40 cm will reflect both echoes, i.e., a direct and an indirect echo. For a pole of around 100 cm, the direct echo is much higher than the indirect echo, and thus the different objects can be differentiated.

Moreover, if the two peaks are included in the envelope, the shape of the peaks is analyzed to determine which type of object reflected the ultrasonic waves. Since objects having a different height, such as curbstone with a maximum height of maximum 20 cm, a pole with a height of substantially 100 cm and a wall with a height between 20cm and 40 cm, produce different echoes and therefore different types of peaks in the envelope, the object may be classified based on the shape of the peaks in the envelope.

Determining the shape of the two peaks may comprise determining a width of the two peaks.

The width of the peaks may vary between the different classes of objects so that determining the width of the peaks, i.e., of at least one peak, may be used for determining the class of the object.

Determining the shape of the envelope may comprise comparing the width of the two peaks to each other.

For example, the curbstone having a height of maximum 20 cm produces an envelope having the two peaks, wherein the first peak may have a width that is smaller than the width of the second peak. The pole having a height of substantially 100 cm produces an envelope having the two peaks, wherein the first peak may have a width that is larger than the width of the second peak. Therefore, classifying the object based on the widths of the two peaks relative to each other is possible.

Determining the shape of the two peaks may comprise determining a height of the two peaks relative to each other.

For example, the curbstone having a height of maximum 20 cm produces an envelope having the two peaks, wherein the first peak exceeds the second peak in height. The pole having a height of substantially 100 cm produces an envelope having the two peaks, wherein the second peak exceeds the first peak in height. Therefore, classifying the object based on the height of the two peaks relative to each other is possible and the heights may be used alternatively or additionally to the widths of the peaks as described above.

When the number of peaks included in the envelope is determined to be equal to two, determining the shape of the envelope may comprise determining a timespan between receiving the two peaks.

When the number of peaks included in the envelope is determined to be equal to two, determining the shape of the envelope may comprise determining a first point in time when a first one of the two peaks is received and determining a second point in time when a second one of the two peaks is received.

The point in time of receiving the peaks and/or the time in between receiving the echoes may vary between the different classes of objects so that determining these two values may be used for determining the class of the object.

Determining the width, the height, the point in time and/or the timespan between receiving the two peaks may be done based on the digital signal of the envelope.

Determining the class of the object based on the determined shape of the envelope may comprise comparing the determined shape of the envelope to a database, wherein the database comprises at least one shape of an envelope for at least one class to be determined.

In conclusion, the above method provides a solution for classifying an object being located in a field of view of the ultrasonic sensor system without determining the height thereof.

Furthermore a control system, optionally comprising an electronic control unit and/or an integrated circuit, may be provided. The control system is configured to carry out the above described method at least partly.

The description given above with respect to the method applies mutatis mutandis to the control system and vice versa.

The electronic control unit (ECU), also known as electronic control module (ECM), may be an embedded system in automotive electronics that is configured to control one or more of the electrical systems or subsystems in a vehicle including the ultrasonic sensor system. The electronic control unit may be connected to the integrated circuit. The (optionally monolithic) integrated circuit (also referred to as an IC, a chip, or a microchip) is a set of electronic circuits on one (small flat) piece (or "chip") of semiconductor material, optionally silicon. MOSFETs (metal-oxide-semiconductor field-effect transistors) may be integrated into the chip. This results in circuits that are orders of magnitude smaller, faster, and less expensive than those constructed of discrete electronic components. The integrated circuit may receive a control signal from the electronic control unit and/or may be supplied with voltage (energy) from the electronic control unit, may be configured to drive the ultrasonic sensor system based on the control signal received from the electronic control unit and/or may be configured to carry out the above described method at least partly and output a respective result of the method via the same or another data line used for receiving the control signal to the electronic control unit.

Furthermore a computer program and/or computer-readable data carrier are provided, comprising instructions which, when being executed by a computer, cause the computer to carry out the above described method at least partly.

The description given above with respect to the method and the control system applies mutatis mutandis to the computer program and/or computer-readable data carrier and vice versa. Here, the computer may be the electronic control unit and/or the integrated circuit.

In the following, the invention is described further in detail with respect to figures 1 to 7.
- Fig. 1: depicts schematically an ultrasonic sensor system, i.e. a hardware, to be used in a method for determining a class of an object using an ultrasonic sensor system,
- Fig. 2: depicts schematically a receiving circuit of the ultrasonic sensor system,
- Fig. 3: depicts schematically in an upper part thereof an envelope resulting when the object is a curbstone and in a lower part thereof three digital signals resulting from converting the envelope of figure 3 with three different thresholds and/or gains,
- Fig. 4: depicts schematically in an upper part thereof an envelope resulting when the object is a pole and in a lower part thereof three digital signals resulting from converting the envelope of figure 4 with three different thresholds and/or gains,
- Fig. 5: depicts schematically a flowchart of the method for determining the class of the object using the ultrasonic sensor system based on the different envelopes shown in figures 3 and 4, and
- Fig. 6: depicts schematically a flowchart of steps for determining a shape of an envelope according to the method of figure 5, and
- Fig. 7: depicts schematically a vehicle, here an automobile, comprising the ultrasonic sensor system of figure 1 which is configured to carry out the method of figures 5 and 6.

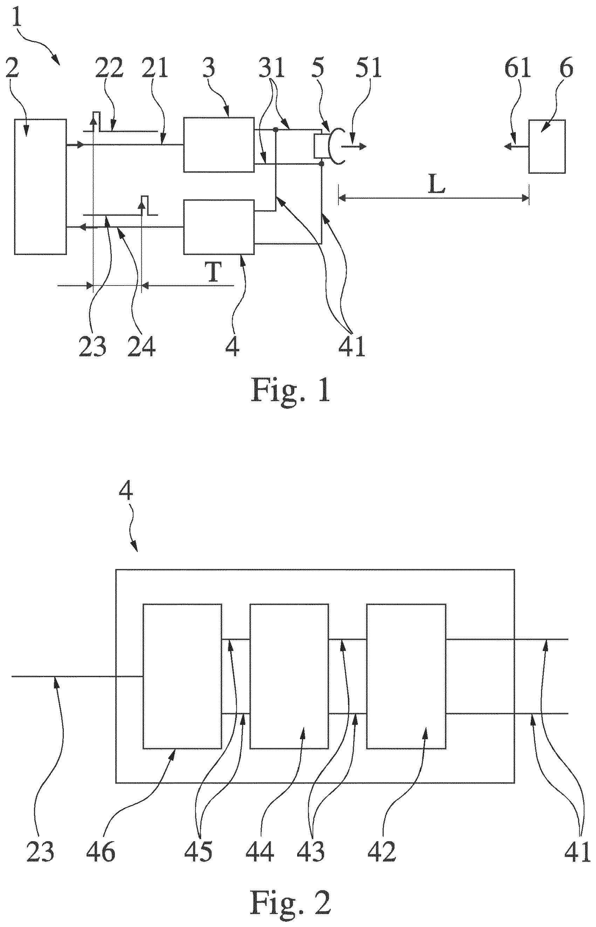

Figure 1 depicts an ultrasonic sensor system 1. The ultrasonic sensor system 1 comprises a control circuit 2, a transmission circuit 3, a receiving circuit 4, and an ultrasonic sensor 5. Moreover, an object 6 to be detected using the ultrasonic sensor system 1 is shown in figure 1.

The control circuit 2 is connected via an input data line 21 to the pulse transmission circuit 3 and configured to send a burst/transmission control signal 22 to the pulse transmission circuit 3 via the input data line 21. The burst/transmission control signal 22 is a digital signal as can be gathered from figure 1.

The transmission circuit 3 drives the ultrasonic sensor 5 based on/controlled by the control signal 22.

Therefore, the transmission circuit 3 is connected to the ultrasonic sensor 5 via a voltage supply line 31 and configured to drive the ultrasonic sensor 3 by applying a voltage having an oscillating amplitude via the voltage supply line 31 to the ultrasonic sensor 5.

More specifically, the transmission circuit 3 applies the voltage having the oscillating amplitude for a predefined time and with the predefined oscillating amplitude to the voltage supply line 31 when the control signal 22 switches from 0 to 1, i.e., is not pulled to 0 by the control circuit 2 (or the other way round, i.e., when the control signal 22 switches from 1 to 0, i.e., is pulled to 0 by the control circuit 2).

The ultrasonic sensor 5 is configured to emit/send an ultrasonic signal 51, a so-called (ultrasonic) pulse comprising emitted ultrasonic waves, when being driven/activated by the pulse transmission circuit 3, i.e., when the pulse transmission circuit 3 applies the voltage to the ultrasonic sensor 5 via the voltage supply line 31.

The ultrasonic sensor 5 is also configured to receive an ultrasonic signal 61 reflected by an object 6, a so-called (ultrasonic) echo comprising reflected ultrasonic waves, and to apply a voltage to the voltage supply line 31 corresponding to an oscillating amplitude of the received ultrasonic signal 61, i.e., the voltage applied by the ultrasonic sensor 5 to the voltage supply line corresponds to the amplitude changing over time of the received echo 61.

Since the ultrasonic sensor 5 is configured to send and receive ultrasonic signals 51, 61, the ultrasonic sensor 5 is a transducer/transceiver.

The receiving circuit 4 is connected to the voltage supply line 31 via a voltage measuring line 41 and configured to measure the voltage applied to the voltage supply line 31 by the pulse transmission circuit 3 and by the ultrasonic sensor 5.

The principle of ultrasonic distance measuring is based on sending the ultrasonic pulse 51, receive the echo 61 reflected by the object 6 and measure a time T between sending the ultrasonic pulse 51 and receiving the echo 61.

The relationship between the distance L from the transducer 5 to the object 6 and the time T it takes to receive the echo is L = c * T/2, where c is the velocity of sound (c = 343 m/s at 20°C). That is, the time delay T between sending the pulse 51 and receiving the echo 61 (i.e., time of flight) is proportional to the distance L to measure. Therefore, the control circuit 2 is able to calculate the distance L when knowing the time T (and optionally the temperature).

The time T is determined by the control circuit 2. The control circuit 2 determines the time T substantially by determining a difference between a time of sending the control signal 22 (timestamp of sending the control signal 22) and receiving an echo detection signal 24 via an output data line 23 from the receiving circuit 4 (timestamp of receiving the echo detection signal 24).

The receiving circuit 4 determines the echo detection signal 24 by converting an analog signal, i.e., the voltage at the voltage supply line 31, into a digital signal. The receiving circuit 4 is shown in detail in figure 2 and comprises an envelope detector 42, an amplifier 44 and an analog-digital-converter 46.

The envelope detector 42 takes the voltage at the voltage supply line 31, which is an (as described above) amplitude modulated signal, as input via the measuring line 41 and provides an output signal, which is the demodulated envelope of the amplitude modulated signal.

The output signal of the envelope detector 42 is provided via an envelope output line 43, the amplifier 44 and an amplified envelope output line 45 to the analog-digital-converter 46.

The amplifier 44 is configured to receive the output signal of the envelope detector 42, amplify it with a (analog) gain, and output the amplified output signal of the envelope detector 42 to the analog-digital-converter 46 via the amplified envelope output line 45.

The analog-digital-converter 46 takes the amplified output signal of the envelope detector 42 as an input and converts the amplified output signal of the envelope detector 42 into a digital signal, i.e., the echo detection signal 24. The analog-digital-converter 46 outputs the echo detection signal 24 via the output data line 23 to the control circuit 2.

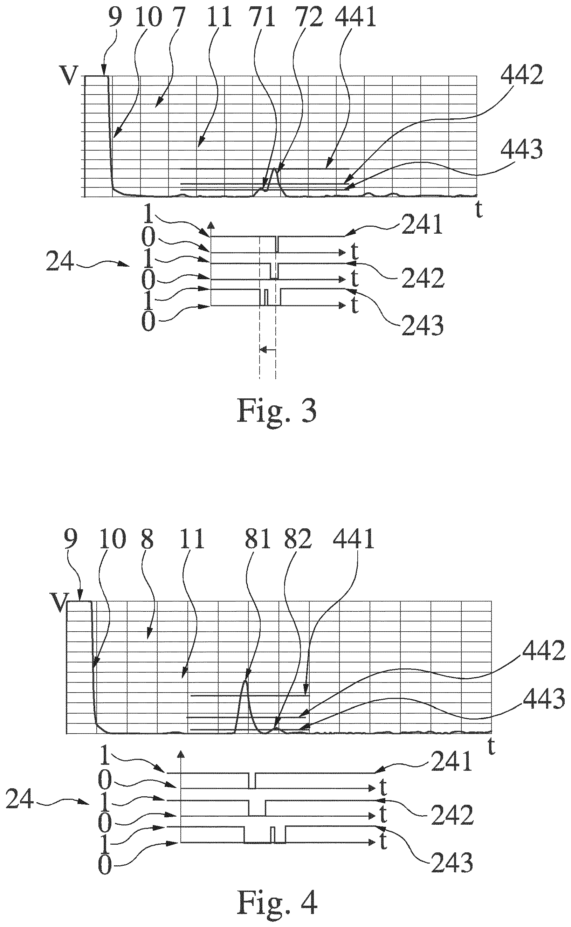

In the following, converting the output signal of the envelope detector 42 (called envelope in the following description) into the echo detection signal 24 using the analog-digital-converter 46 will be explained in detail with respect to figures 3 to 5.

At a top of figure 3 an upper diagram for the analog signal is shown. The upper diagram of figure 3 shows the envelope 7, i.e., the input signal of the analog-digital-converter 46, wherein a voltage V is plotted on a vertical axis of the upper diagram and a time t (it would also be possible to plot the distance L on the horizontal axis) is plotted on a horizontal axis of the upper diagram (it would also be possible to plot the distance L on the horizontal axis).

At a bottom of figure 3 a lower diagram for the digital signal is shown. The lower diagram of figure 3 shows three digital signals 241, 242, 243, i.e., the output signals of the analog-digital-converter 46, wherein a value of the respective digital signal 241, 242, 243 is plotted on a vertical axis of the lower diagram (either 1 or 0) and the time t is plotted on a horizontal axis of the lower diagram.

At a top of figure 4 an upper diagram for the analog signal is shown. The upper diagram of figure 4 shows the envelope 8, i.e., the input signal of the analog-digital-converter 46, wherein a voltage V is plotted on a vertical axis of the upper diagram and a time t (it would also be possible to plot the distance L on the horizontal axis) is plotted on a horizontal axis of the upper diagram (it would also be possible to plot the distance L on the horizontal axis).

At a bottom of figure 4 a lower diagram for the digital signal is shown. The lower diagram of figure 4 shows three digital signals 241, 242, 243, i.e., the output signals of the analog-digital-converter 46, wherein a value of the respective digital signal 241, 242, 243 is plotted on a vertical axis of the lower diagram (either 1 or 0) and the time t is plotted on a horizontal axis of the lower diagram.

The envelope 7 shown in figure 3 results when the object 6 (see figure 1) reflecting the emitted ultrasonic signal 51 is a curbstone having a height of approximately 20 cm. The envelope 8 shown in figure 4 results when the object 6 (see figure 1) reflecting the emitted ultrasonic signal 51 is a pole having a height of approximately 100 cm.

The (in the present example) three different digital signals 241, 242, 243 result when analyzing the respective envelope 7, 8 with the three different thresholds 441, 442, 443, because the analog-digital-converter 46 is configured to pull the respective digital signal from 1 to 0 (i.e., to the ground) when the respective envelope 7, 8 exceeds the respective threshold 441, 442, 443 (other way round is also possible, i.e., the analog-digital-converter 46 is configured to push the respective digital signal from 0 to 1 when the respective envelope 7, 8 exceeds the respective threshold 441, 442, 443). That is, by tuning the threshold 441, 442, 443 of the analog-digital-converter 46 different digital signals result 241, 242, 243.

Moreover (but not shown in figure 3 and 4), the (in the present example) three different digital signals 241, 242, 243 may also result when analyzing envelopes 7, 8 with the same threshold but with three different gains of the amplifier 44. More specifically, when increasing the gain of the amplifier 44, the single amplitude values of the respective envelope 7, 8 are increased while the threshold remains at the same level and therefore different digital signals 241, 242, 243 may result when converting the different amplified envelopes. That is, alternatively or additionally to tuning the threshold of the analog-digital-converter 46, it is also possible to tune the gain of the amplifier 44 such that different digital signals result.

Objects 6 having a relatively small height, e.g., below 100 cm, reflect the ultrasonic pulse 51 such that two echoes are received at the ultrasonic sensor 5, i.e., the envelope 7, 8 comprises to peaks 71, 72, 81, 82. A first or direct echo reflected by the object 6 returns directly to the ultrasonic sensor 5 and can be seen in the envelope 7, 8 as a first peak 71, 81. A second or indirect echo is at first reflected by the object 6 and afterwards by a second object, e.g., the floor between the ultrasonic sensor 5 and the object 6 and/or a car at which the ultrasonic sensor system 1 is installed, then returns to the ultrasonic sensor 5 and can be seen in the envelope 7, 8 as a second peak 72, 82 following the first peak 71, 81.

Additionally, the relatively small objects produce different shapes of envelopes 7, 8. This phenomenon becomes clear when looking at figures 3 and 4 together. Both envelopes 7, 8 comprise two peaks 71, 72, 81, 82, but the first peak 71 of the envelope 7 of the curbstone is smaller than the second peak 72 of the envelope 7 of the curbstone whereas the second peak 82 of the envelope 8 of the pole is smaller than the first peak 81 of the envelope 8 of the pole.

This knowledge, i.e., that the different digital signals 241, 242, 243 result because of the different thresholds 441, 442, 443 and/or different gains, and the knowledge that objects are producing a specific (wave) form/shape of the envelope 7, 8 depending on their height are used in a method for classifying an object according to the present embodiment as explained in detail below.

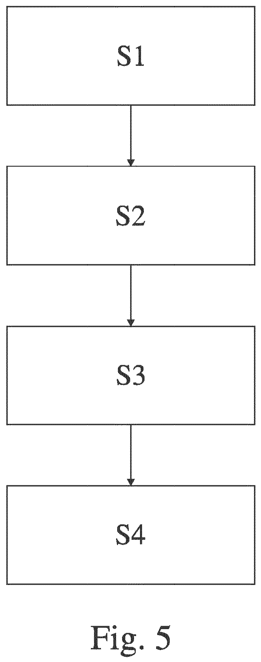

Figure 5 depicts the flowchart of the method for determining a class of an object using the above described sensor system 1.

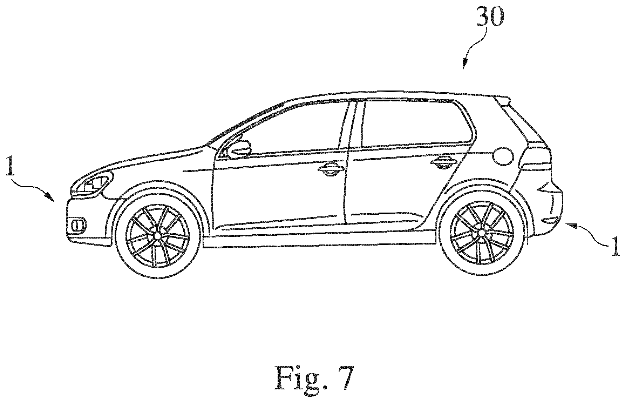

In the first step S1 of the method, the ultrasonic sensor 51 of the ultrasonic sensor system 1 is driven by the transmission circuit 3 to emit an ultrasonic signal 51 comprising ultrasonic waves. This might be called driving stage of the ultrasonic sensor 5 during which the envelope is on a plateau 9, as depicted in figures 7 and 8.

During a following ring down time 10 of the ultrasonic sensor 5 the envelope drops from the plateau 9 and after the ring down time 10 a receiving stage 11 begins, as depicted in figures 7 and 8.

In a second step S2 of the method, i.e., during the receiving stage 11, the ultrasonic waves 61 reflected by the object 6 are received at the ultrasonic sensor system 1, here at the ultrasonic sensor 5.

In a third step S3 of the method, a shape of the envelope 7, 8 corresponding to an amplitude of the ultrasonic waves 61 received at the ultrasonic sensor system 1 is determined.

In a fourth step S4 of the method, the class of the object 6 is determined based on the determined shape of the envelope 7, 8.

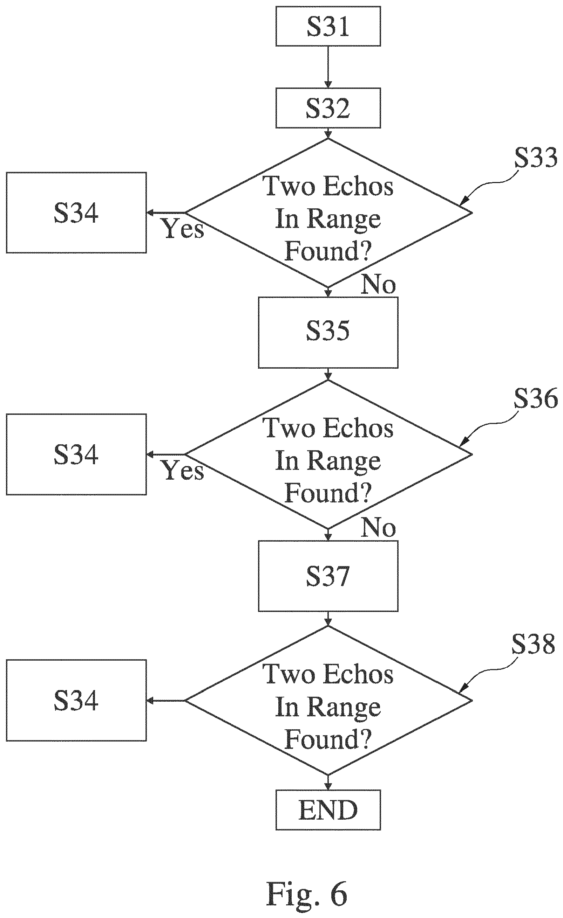

In the following, the third step S3 of the method will be explained in detail with respect to figures 3, 4 and 6, wherein figure 6 depicts a flowchart of steps for determining a shape of the envelope 7, 8 corresponding to an amplitude of the ultrasonic waves 61 received at the ultrasonic sensor system 1.

Determining the shape of the envelope 7, 8 during the third step S3 of the method comprises determining a number of peaks 71, 72, 81, 82 included in the envelope 7, 8 after emitting the ultrasonic signal 51. Determining the shape of the envelope further comprises converting the envelope 7, 8 from the analog signal shown on top of figures 3 and 4, respectively, into one or more (different) digital signals 241, 242, 243 using one or more different thresholds 441, 442, 443. This is described in detail below.

In order to determine the number of peaks 71, 72, 81, 82 in the envelope, in a first step S31 of determining the shape of the envelope 7, 8 a maximum of the envelope 7, 8 is determined. This might be done using a digitalized peak detector installed in an integrated circuit and being configured to report the amplitude.

Based on the determined maximum, a first threshold 441 is determined in a second step S32 of determining the shape of the envelope 7, 8, wherein the first threshold 441 is smaller than the determined maximum of the envelope 7, 8. The first threshold 441 is used by the analog-digital-converter 44 in the second step S32 of determining the shape of the envelope 7, 8 in the above described manner to generate the first digital signal 241.

More specifically, the analog-digital-converter 44 sets the first digital signal 241 to 0 (i.e., the first digital signal 241 goes to low) when the envelope 7, 8 exceeds the first threshold 441, and to 1 (i.e., the first digital signal 241 goes to high) when the envelope 7, 8 is below the first threshold 441 (or sets the first digital signal 241 to 1 when the envelope 7, 8 exceeds the first threshold 441 and to 0 when the envelope 7, 8 is below the first threshold 441). The high and low signals may be determined by a digital comparator in the integrated circuit.

In a third step S33 of determining the shape of the envelope 7, 8, the first digital signal 241 is analyzed and it is checked if the envelope 7, 8 comprises two peaks, i.e., if the first digital signal 241 changes two times from 0 to 1 (or from 1 to 0). Determining the number of peaks could be done via any computing unit such as an electronic control unit and/or an integrated processor in the integrated circuit.

If the first digital signal 241 changes two times from 0 to 1 (or from 1 to 0), i.e., the number of peaks 71, 72, 81, 82 is determined to be equal to two, the method proceeds with a fourth step S34 of determining the shape of the envelope 7, 8.

If the first digital signal 241 does not change two times from 0 to 1 (or from 1 to 0), i.e., the number of peaks 71, 72, 81, 82 is determined to be not equal to two, the method proceeds with a fifth step S35 of determining the shape of the envelope 7, 8.

In the present case, the number of peaks 71, 72, 81, 82 is determined to be not equal to two (but one) based on the first digital signal 241, such that a second threshold 442 is determined in the fifth step S35 of determining the shape of the envelope 7, 8.

The second threshold 442 is determined in the fifth step S35 of determining the shape of the envelope 7, 8, wherein the second threshold 442 is smaller than the determined first threshold 441. The second threshold 442 is used by the analog-digital-converter 44 in the fifth step S35 of determining the shape of the envelope 7, 8 in the above described manner to generate the second digital signal 242.

More specifically, the analog-digital-converter 44 sets the second digital signal 242 to 0 when the envelope 7, 8 exceeds the second threshold 442 and to 1 when the envelope 7, 8 is below the second threshold 442 (or sets the second digital signal 242 to 1 when the envelope 7, 8 exceeds the second threshold 442 and to 0 when the envelope 7, 8 is below the second threshold 442).

In a sixth step S36 of determining the shape of the envelope 7, 8, the second digital signal 242 is analyzed and it is checked if the envelope 7, 8 comprises two peaks, i.e., if the second digital signal 242 changes two times from 0 to 1 (or from 1 to 0).

If the second digital signal 242 changes two times from 0 to 1 (or from 1 to 0), i.e., the number of peaks 71, 72, 81, 82 is determined to be equal to two, the method proceeds with the fourth step S34 of determining the shape of the envelope 7, 8.

If the second digital signal 242 does not change two times from 0 to 1 (or from 1 to 0), i.e., the number of peaks 71, 72, 81, 82 is determined to be not equal to two, the method proceeds with a seventh step S37 of determining the shape of the envelope 7, 8.

In the present case, the number of peaks 71, 72, 81, 82 is determined to be not equal to two (but one) based on the second digital signal 242, such that a third threshold 443 is determined in the seventh step S37 of determining the shape of the envelope 7, 8.

The third threshold 443 is determined in the seventh step S37 of determining the shape of the envelope 7, 8, wherein the third threshold 443 is smaller than the determined second threshold 443. The third threshold 443 is used by the analog-digital-converter 44 in the seventh step S37 of determining the shape of the envelope 7, 8 in the above described manner to generate the third digital signal 243.

More specifically, the analog-digital-converter 44 sets the third digital signal 243 to 0 when the envelope 7, 8 exceeds the third threshold 443 and to 1 when the envelope 7, 8 is below the third threshold 443 (or sets the third digital signal 443 to 1 when the envelope 7, 8 exceeds the third threshold 443 and to 0 when the envelope 7, 8 is below the third threshold 443).

In an eighth step S38 of determining the shape of the envelope 7, 8, the third digital signal 243 is analyzed and it is checked if the envelope 7, 8 comprises two peaks 71, 72, 81, 82, i.e., if the third digital signal 243 changes two times from 0 to 1 (or from 1 to 0).

If the third digital signal 243 does not change two times from 0 to 1 (or from 1 to 0), i.e., the number of peaks 71, 72, 81, 82 is determined to be not equal to two, the method ends.

If the second digital signal 242 changes two times from 0 to 1 (or from 1 to 0), i.e., the number of peaks 71, 72, 81, 82 is determined to be equal to two, the method proceeds with the fourth step S34 of determining the shape of the envelope 7, 8.

In the present case, the number of peaks 71, 72, 81, 82 is determined to be equal to two based on the third digital signal 243, such that the method proceeds with the fourth step S34 of determining the shape of the envelope 7, 8.

In the fourth step S34 of determining the shape of the envelope 7, 8, the shape of the envelope 7, 8 is determined based at least on the third digital signal 243, and optionally also based on the first and/or the second digital signal 241, 242.

Thereby the shape of the two peaks 71, 72, 81, 82 is determined. This includes determining a width of the two peaks 71, 72, 81, 82 and optionally comparing the width of the two peaks 71, 72, 81, 82 to each other. Alternatively or additionally, a height of the two peaks 71, 72, 81, 82 relative to each other may be determined. Alternatively or additionally, a first point in time when the first one of the two peaks 71, 81 is received and determining a second point in time when the second one of the two peaks 72, 82 is received may be determined. Alternatively or additionally, a timespan between receiving the two peaks 71, 72, 81, 82 may be determined.

As described above, the thresholds 441, 442, 443 were tuned to determine the shape of the envelope 7, 8. However, it is also possible to determine the maximum of the envelope 7, 8 using a first analog gain, and converting the envelope using a fixed threshold, optionally being substantially equal to the determined maximum of the envelope 7, 8, and tuning the analog gain to three different levels.

The shape of the envelope 7, 8 determined in the fourth step S34 of determining the shape of the envelope 7, 8 is used in the fourth step S4 (see figure 5) of the method to determine the class of the object 6, here either curbstone, pole or wall. As described above, all these objects produce different envelopes, i.e., envelopes having a characteristic shape allowing to classify the object. These characteristics of the shape of the envelope for the different classes of objects, here curbstone, pole and wall, are part of a database, wherein the characteristic determined in the fourth step S34 of determining the shape of the envelope 7, 8 (such a width and location of the peaks 71, 72, 81, 82) are compared to the characteristics in the database to classify the object 6.

**In** the above described method, an analog gain of the amplifier 44 was changed. However, it is also possible to additionally or alternatively change a digital gain of the amplifier 44 in the above described manner.

The above described method for classifying the object 6 may be used in an automobile 30, as depicted in figure 7. The automobile 30 comprises the above described ultrasonic sensor system 1 which is configured to carry out the above described method. At least one of the ultrasonic systems 1 is integrated into each of the front bumper and the rear bumper of the vehicle 30, respectively, and form part of a parking assistance system of the vehicle 30.

### Reference signs

- 1: ultrasonic sensor system
- 2: control circuit
- 21: input data line
- 22: burst/transmission control signal
- 23: output data line
- 24: echo detection signal
- 241: first digital signal
- 242: second digital signal
- 243: third digital signal
- 3: transmission circuit
- 31: voltage supply line
- 4: receiving circuit
- 41: measuring line
- 42: envelope detector
- 43: envelope output line
- 44: amplifier
- 441: first threshold
- 442: second threshold
- 443: third threshold
- 45: amplified envelope output line
- 46: analog-digital-converter
- 5: ultrasonic sensor
- 51: ultrasonic signal
- 6: object
- 61: reflected and received ultrasonic signal/echo
- 7: envelope resulting from reflected ultrasonic waves of a curbstone
- 71: first peak
- 72: second peak
- 8: envelope resulting from reflected ultrasonic waves of a pole
- 81: first peak
- 82: second peak
- 9: plateau of the envelope during driving stage
- 10: ring down time
- 11: receiving stage

- 30: vehicle

## Claims

1. Method for determining a class of an object (6) using an ultrasonic sensor system (1), wherein the method comprises:
- driving the ultrasonic sensor system (1) to emit ultrasonic waves (51),
- receiving the ultrasonic waves (61) reflected by the object (6) at the ultrasonic sensor system (1),
- determining a shape of an envelope (7, 8) corresponding to an amplitude of the ultrasonic waves (61) received at the ultrasonic sensor system (1), wherein determining the shape of the envelope (7, 8) comprises determining a number of peaks (71, 72, 81, 82) included in the envelope (7, 8) after emitting the ultrasonic waves (51), and
- determining the class of the object (6) based on the determined shape of the envelope (7,8),
**characterized in that**
- determining the shape of the envelope (7, 8) comprises, when the number of peaks (71, 72, 81, 82) included in the envelope (7, 8) is determined to be equal to two, determining a shape of the peaks (71, 72, 81, 82) included in the envelope (7, 8).

2. Method according to claim 1, wherein determining the shape of the envelope (7, 8) comprises converting the envelope (7, 8) from an analog signal into at least one digital signal (241, 242, 243) and determining the number of peaks (71, 72, 81, 82) based on the at least one digital signal (241, 242, 243).

3. Method according to claim 2, wherein converting the envelope (7, 8) from the analog signal into the at least one digital signal (241, 242, 243) comprises:
- determining a maximum of the envelope (7, 8), and
- converting the envelope (7, 8) using a predefined threshold (441, 442, 443) being smaller than the determined maximum of the envelope (7, 8) to generate the at least one digital signal (241, 242, 243).

4. Method according to claim 2, wherein converting the envelope (7, 8) from the analog signal into the at least one digital signal (241, 242, 243) comprises:
- determining a maximum of the envelope (7, 8) using a first analog gain, and
- converting the envelope (7, 8) using a predefined threshold (441, 442, 443) and
using a second analog gain exceeding the first analog gain, the predefined threshold being equal to the determined maximum of the envelope (7, 8) or being smaller than the determined maximum of the envelope (7, 8).

5. Method according to claim 3 or 4, wherein converting the envelope (7, 8) from the analog signal into the at least one digital signal (241, 242, 243) comprises:
- setting the at least one digital signal (241, 242, 243) to 1 when the envelope (7, 8) exceeds the threshold (441, 442, 443) and to 0 when the envelope (7, 8) is below the threshold (441, 442, 443), or
- setting the at least one digital signal (241, 242, 243) to 0 when the envelope (7, 8) exceeds the threshold (441, 442, 443) and to 1 when the envelope (7, 8) is below the threshold (441, 442, 443).

6. Method according to claim 1, wherein determining the shape of the two peaks (71, 72, 81, 82) comprises determining a width of the two peaks (71, 72, 81, 82).

7. Method according to claim 6, wherein determining the shape of the envelope (7, 8) comprises comparing the width of the two peaks (71, 72, 81, 82) to each other.

8. Method according to any of claims 1 to 7, wherein determining the shape of the two peaks (71, 72, 81, 82) comprises determining a height of the two peaks (71, 72, 81, 82) relative to each other.

9. Method according to any of claims 1 to 8, wherein determining the shape of the envelope (7, 8) comprises, when the number of peaks (71, 72, 81, 82) included in the envelope (7, 8) is determined to be equal to two, determining a first point in time when a first one of the two peaks (71, 81) is received and determining a second point in time when a second one of the two peaks (72, 82) is received.

10. Method according to any of claims 1 to 9, wherein determining the shape of the envelope (7, 8) comprises, when the number of peaks (71, 72, 81, 82) included in the envelope (7, 8) is determined to be equal to two, determining a timespan between receiving the two peaks (71, 72, 81, 82).

11. Method according to any of claims 1 to 10, wherein determining the class of the object (6) based on the determined shape of the envelope (7, 8) comprises comparing the determined shape of the envelope (7, 8) to a database, wherein the database comprises at least one shape of an envelope for at least one class to be determined.

12. Control system, comprising an electronic control unit and/or an integrated circuit, wherein the control system is configured to carry out the method according to any of claims 1 to 11.

13. Computer program comprising instructions which, when being executed by the control system according to claim 12, cause the control system to carry out the method according to any of claims 1 to 11.

## Patentansprüche

1. Verfahren zum Bestimmen einer Klasse eines Objekts (6) mittels eines Ultraschallsensorsystems (1), wobei das Verfahren Folgendes umfasst:
- Ansteuern des Ultraschallsensorsystems (1), um Ultraschallwellen (51) zu emittieren,
- Empfangen der durch das Objekt (6) reflektierten Ultraschallwellen (61) an dem Ultraschallsensorsystem (1),
- Bestimmen einer Form einer Hüllkurve (7, 8), die einer Amplitude der an dem Ultraschallsensorsystem (1) empfangenen Ultraschallwellen (61) entspricht, wobei das Bestimmen der Form der Hüllkurve (7, 8) Bestimmen einer Anzahl von Spitzen (71, 72, 81, 82) umfasst, die in der Hüllkurve (7, 8) nach dem Emittieren der Ultraschallwellen (51) beinhaltet sind, und
- Bestimmen der Klasse des Objekts (6) auf Grundlage der bestimmten Form der Hüllkurve (7, 8),
**dadurch gekennzeichnet, dass**
- das Bestimmen der Form der Hüllkurve (7, 8), wenn die Anzahl von in der Hüllkurve (7, 8) beinhalteten Spitzen (71, 72, 81, 82) als gleich zwei bestimmt wird, Bestimmen einer Form der in der Hüllkurve (7, 8) beinhalteten Spitzen (71, 72, 81, 82) umfasst.

2. Verfahren nach Anspruch 1, wobei das Bestimmen der Form der Hüllkurve (7, 8) Umwandeln der Hüllkurve (7, 8) von einem analogen Signal in mindestens ein digitales Signal (241, 242, 243) und Bestimmen der Anzahl von Spitzen (71, 72, 81, 82) auf Grundlage des mindestens einen digitalen Signals (241, 242, 243) umfasst.

3. Verfahren nach Anspruch 2, wobei das Umwandeln der Hüllkurve (7, 8) von dem analogen Signal in das mindestens eine digitale Signal (241, 242, 243) Folgendes umfasst:
Bestimmen eines Maximums der Hüllkurve (7, 8) und
Umwandeln der Hüllkurve (7, 8) mittels eines vordefinierten Schwellenwerts (441, 442, 443), der kleiner als das bestimmte Maximum der Hüllkurve (7, 8) ist, um das mindestens eine digitale Signal (241, 242, 243) zu generieren.

4. Verfahren nach Anspruch 2, wobei das Umwandeln der Hüllkurve (7, 8) von dem analogen Signal in das mindestens eine digitale Signal (241, 242, 243) Folgendes umfasst:
- Bestimmen eines Maximums der Hüllkurve (7, 8) mittels einer ersten analogen Verstärkung und
- Umwandeln der Hüllkurve (7, 8) mittels eines vordefinierten Schwellenwerts (441, 442, 443) und Verwenden einer zweiten analogen Verstärkung, die größer als die erste analoge Verstärkung ist, wobei der vordefinierte Schwellenwert gleich dem bestimmten Maximum der Hüllkurve (7, 8) oder kleiner als das bestimmte Maximum der Hüllkurve (7, 8) ist.

5. Verfahren nach Anspruch 3 oder 4, wobei das Umwandeln der Hüllkurve (7, 8) von dem analogen Signal in das mindestens eine digitale Signal (241, 242, 243) Folgendes umfasst:
- Setzen des mindestens einen digitalen Signals (241, 242, 243) auf 1, wenn die Hüllkurve (7, 8) den Schwellenwert (441, 442, 443) überschreitet, und auf 0, wenn die Hüllkurve (7, 8) unter dem Schwellenwert (441, 442, 443) liegt, oder
- Setzen des mindestens einen digitalen Signals (241, 242, 243) auf 0, wenn die Hüllkurve (7, 8) den Schwellenwert (441, 442, 443) überschreitet, und auf 1, wenn die Hüllkurve (7, 8) unter dem Schwellenwert (441, 442, 443) liegt.

6. Verfahren nach Anspruch 1, wobei das Bestimmen der Form der zwei Spitzen (71, 72, 81, 82) Bestimmen einer Breite der zwei Spitzen (71, 72, 81, 82) umfasst.

7. Verfahren nach Anspruch 6, wobei das Bestimmen der Form der Hüllkurve (7, 8) Vergleichen der Breite der zwei Spitzen (71, 72, 81, 82) miteinander umfasst.

8. Verfahren nach einem der Ansprüche 1 bis 7, wobei das Bestimmen der Form der zwei Spitzen (71, 72, 81, 82) Bestimmen einer Höhe der zwei Spitzen (71, 72, 81, 82) relativ zueinander umfasst.

9. Verfahren nach einem der Ansprüche 1 bis 8, wobei das Bestimmen der Form der Hüllkurve (7, 8), wenn die Anzahl von in der Hüllkurve (7, 8) beinhalteten Spitzen (71, 72, 81, 82) als gleich zwei bestimmt wird, Bestimmen eines ersten Zeitpunkts, zu dem eine erste der zwei Spitzen (71, 81) empfangen wird, und Bestimmen eines zweiten Zeitpunkts, zu dem eine zweite der zwei Spitzen (72, 82) empfangen wird, umfasst.

10. Verfahren nach einem der Ansprüche 1 bis 9, wobei das Bestimmen der Form der Hüllkurve (7, 8), wenn die Anzahl von in der Hüllkurve (7, 8) beinhalteten Spitzen (71, 72, 81, 82) als gleich zwei bestimmt wird, Bestimmen einer Zeitspanne zwischen dem Empfangen der zwei Spitzen (71, 72, 81, 82) umfasst.

11. Verfahren nach einem der Ansprüche 1 bis 10, wobei das Bestimmen der Klasse des Objekts (6) auf Grundlage der bestimmten Form der Hüllkurve (7, 8) Vergleichen der bestimmten Form der Hüllkurve (7, 8) mit einer Datenbank umfasst, wobei die Datenbank mindestens eine Form einer Hüllkurve für mindestens eine zu bestimmende Klasse umfasst.

12. Steuersystem, das eine elektronische Steuereinheit und/oder eine integrierte Schaltung umfasst, wobei das Steuersystem dazu konfiguriert ist, das Verfahren nach einem der Ansprüche 1 bis 11 durchzuführen.

13. Computerprogramm, das Anweisungen umfasst, die bei Ausführung durch das Steuersystem nach Anspruch 12 das Steuersystem dazu veranlassen, das Verfahren nach einem der Ansprüche 1 bis 11 durchzuführen.

## Revendications

1. Procédé de détermination d'une classe d'un objet (6) à l'aide d'un système de capteurs à ultrasons (1), dans lequel le procédé comprend :
- émettre des ondes ultrasonores (51),
- la réception des ondes ultrasonores (61) réfléchies par l'objet (6) au niveau du système de capteur à ultrasons (1),
- la détermination d'une forme d'une enveloppe (7, 8) correspondant à une amplitude des ondes ultrasonores (61) reçues au niveau du système de capteur à ultrasons (1), dans lequel la détermination de la forme de l'enveloppe (7, 8) comprend la détermination d'un nombre de pics (71, 72, 81, 82) inclus dans l'enveloppe (7, 8) après l'émission des ondes ultrasonores (51), et
- la détermination de la classe de l'objet (6) sur la base de la forme déterminée de l'enveloppe (7,8),
**caractérisé en ce que**
- la détermination de la forme de l'enveloppe (7, 8) comprend, lorsque le nombre de pics (71, 72, 81, 82) inclus dans l'enveloppe (7, 8) est déterminé comme étant égal à deux, la détermination d'une forme des pics (71, 72, 81, 82) inclus dans l'enveloppe (7, 8).

2. Procédé selon la revendication 1, dans lequel la détermination de la forme de l'enveloppe (7, 8) comprend la conversion de l'enveloppe (7, 8) d'un signal analogique en au moins un signal numérique (241, 242, 243) et la détermination du nombre de pics (71, 72, 81, 82) sur la base de l'au moins un signal numérique (241, 242, 243).

3. Procédé selon la revendication 2, dans lequel la conversion de l'enveloppe (7, 8) du signal analogique en l'au moins un signal numérique (241, 242, 243) comprend :
- la détermination d'un maximum de l'enveloppe (7, 8), et
- la conversion de l'enveloppe (7, 8) en utilisant un seuil prédéfini (441, 442, 443) étant inférieur au maximum déterminé de l'enveloppe (7, 8) pour générer l'au moins un signal numérique (241, 242, 243).

4. Procédé selon la revendication 2, dans lequel la conversion de l'enveloppe (7, 8) du signal analogique en l'au moins un signal numérique (241, 242, 243) comprend :
- la détermination d'un maximum de l'enveloppe (7, 8) à l'aide d'un premier gain analogique, et
- la conversion de l'enveloppe (7, 8) en utilisant un seuil prédéfini (441, 442, 443) et en utilisant un second gain analogique supérieur au premier gain analogique, le seuil prédéfini étant égal au maximum déterminé de l'enveloppe (7, 8) ou étant inférieur au maximum déterminé de l'enveloppe (7, 8).

5. Procédé selon la revendication 3 ou 4, dans lequel la conversion de l'enveloppe (7, 8) du signal analogique en l'au moins un signal numérique (241, 242, 243) comprend :
- le réglage de l'au moins un signal numérique (241, 242, 243) sur 1 lorsque l'enveloppe (7, 8) dépasse le seuil (441, 442, 443) et sur 0 lorsque l'enveloppe (7, 8) est inférieure au seuil (441, 442, 443), ou
- le réglage de l'au moins un signal numérique (241, 242, 243) sur 0 lorsque l'enveloppe (7, 8) dépasse le seuil (441, 442, 443) et sur 1 lorsque l'enveloppe (7, 8) est inférieure au seuil (441, 442, 443).

6. Procédé selon la revendication 1, dans lequel la détermination de la forme des deux pics (71, 72, 81, 82) comprend la détermination d'une largeur des deux pics (71, 72, 81, 82).

7. Procédé selon la revendication 6, dans lequel la détermination de la forme de l'enveloppe (7, 8) comprend la comparaison de la largeur des deux pics (71, 72, 81, 82) l'un par rapport à l'autre.

8. Procédé selon l'une quelconque des revendications 1 à 7, dans lequel la détermination de la forme des deux pics (71, 72, 81, 82) comprend la détermination d'une hauteur des deux pics (71, 72, 81, 82) l'un par rapport à l'autre.

9. Procédé selon l'une quelconque des revendications 1 à 8, dans lequel la détermination de la forme de l'enveloppe (7, 8) comprend, lorsque le nombre de pics (71, 72, 81, 82) inclus dans l'enveloppe (7, 8) est déterminé comme étant égal à deux, la détermination d'un premier instant où un premier des deux pics (71, 81) est reçu et la détermination d'un second instant où un second des deux pics (72, 82) est reçu.

10. Procédé selon l'une quelconque des revendications 1 à 9, dans lequel la détermination de la forme de l'enveloppe (7, 8) comprend, lorsque le nombre de pics (71, 72, 81, 82) inclus dans l'enveloppe (7, 8) est déterminé comme étant égal à deux, la détermination d'un intervalle de temps entre la réception des deux pics (71, 72, 81, 82).

11. Procédé selon l'une quelconque des revendications 1 à 10, dans lequel la détermination de la classe de l'objet (6) sur la base de la forme déterminée de l'enveloppe (7, 8) comprend la comparaison de la forme déterminée de l'enveloppe (7, 8) à une base de données, dans lequel la base de données comprend au moins une forme d'une enveloppe pour au moins une classe à déterminer.

12. Système de commande, comprenant une unité de commande électronique et/ou un circuit intégré, dans lequel le système de commande est configuré pour mettre en œuvre le procédé selon l'une quelconque des revendications 1 à 11.

13. Programme informatique comprenant des instructions qui, lorsqu'elles sont exécutées par le système de commande selon la revendication 12, amènent le système de commande à mettre en œuvre le procédé selon l'une quelconque des revendications 1 à 11.
